# EUROPEAN PATENT APPLICATION

(11) **EP 2 311 927 A1**
(43) Date of publication of application: **20.04.2011**
(21) Application number: 09802648.7
(22) Date of filing: 10.07.2009
(51) Int. Cl.: C10M 171/00, C10M 107/02, C10M 117/00, C10M 169/02, C10N 20/00, C10N 30/00, C10N 30/06, C10N 40/02, C10N 50/10

(54) **GREASE COMPOSITION FOR MOUNTER, GUIDING DEVICE CONTAINING THE SAME, AND MOUNTER**

(30) Priority: 01.08.2008 JP 2008199548
(71) Applicant: Panasonic Corporation, Kadoma-shi Osaka 571-8501 (JP); Idemitsu Kosan Co., Ltd., Chiyoda-ku Tokyo 100-8321 (JP)
(72) Inventor: FUJINAMI, Yukitoshi, Ichihara-shi Chiba 299-0107 (JP)
(74) Representative: Ehlers, Jochen
(86) International application number: PCT/JP2009/003239
(87) International publication number: WO 2010/013398

(57) **Abstract**

The present invention has the object of providing a grease composition for a mounter that exhibits excellent stability to mechanical shearing, and excellent mixing stability, a guiding device for a mounter that includes the grease composition, and a mounter that mounts the guiding device. A grease composition for a mounter includes a base oil and a thickening agent, has a worked penetration of 200 - 400, a dropping point of greater than or equal to 220°C, and a worked penetration change during a roll stability test of 0 to less than or equal to +100.

## Description

### TECHNICAL FIELD

The present invention relates to a grease composition for a mounter which grips a electronic component and mounts it on a substrate. More specifically, the present invention relates to a grease composition for a mounter that exhibits excellent stability in relation to mechanical shearing, and excellent mixing stability. In addition, the present invention relates to a guiding device containing the grease composition, and a component mounter that equipped with the guiding device.

### BACKGROUND ART

Generally, a guiding device has an orbital shaft having a surface on which rolling bodies such as a bearing or the like roll, and a movement member that is engaged with the orbital shaft through the rolling bodies to be relatively movable along the orbital shaft. Sliding resistance is low since the guiding operation is based on the roll of the bearings or the like. As a result, applications are enabled in relation to various types of machine tools or conveying equipment.
Such guiding devices include a guiding device equipped in a mounter such as a semiconductor mounter or the like that joins semiconductor elements, or a component mounter that mounts electronic components. The guiding device is required to operate in a movement direction at an extremely a maximum operational speed of at least 1 m/s (for example, 3 m/s or more), or a maximum acceleration of 10 m/s² or more.

Generally, grease is used in a guiding device to reduce wear on the bearing itself, or wear on the orbital shaft surface on which the bearing rolls, and thereby to suppress the generation of heat. In particular, since there is an increase in the stirring resistance of a lubricant on a lubrication surface in a guiding device that operates at a high speed, and there is an increase in the running distance per operating interval, stable long-term supply of a lubricant that has superior lubrication performance is important in order to increase the product life.

On the other hand, the following types of grease have been conventionally developed for use in an application.
(1) A grease for high rolling-speed bearings is formed from a grease in which an aliphatic urea-based thickening agent is formulated into a base oil having a kinematic viscosity at 40 ° C of 30 - 60 cSt (In the present specification, mm²/s will be used uniformly as the unit for kinematic viscosity. 1 cSt = 1 mm²/s) (Patent Literature 1).
(2) A grease composition that is characterized by mixing a lithium complex-soap thickening agent containing a fibrous body that has a fiber diameter of 0.2 µm and a fiber length of at least 3 µm with a base oil that comprises a mixture of a polar group-containing lubrication oil including polar groups in its molecular structure and a non-polar lubrication oil (Patent Literature 2).

### CITATION LIST

### PATENT LITERATURE

Patent Literature 1: Japanese Patent Application Laid-Open No. 2000-169872
Patent Literature 2: Japanese Patent Application Laid-Open No. 2003-313574

### SUMMARY

### TECHNICAL PROBLEM

When a large shearing force is applied to a grease, the temperature becomes extremely high at point of application of the grease in a high-speed operation guiding device. In particular, the surface temperature of a ball bearing used in a linear guide is often in excess of 200°C.

When a large shearing force and a high temperature are applied to a conventional grease, the problem arises that the grease becomes thinned, and flies and scatters, or drips and becomes attached to the surface of a mounted substrate or other components. In this case, such attached grease causes quality problems including conduction failure after substrate manufacture, problems regarding external appearance, and problems associated with conveying defects when conveying the substrate during manufacture.

Since the a large reduction in consistency is caused when a foreign type of grease is mixed with a conventional grease, generally, a manufacturer recommends that other types of grease should not be mixed. In particular, a reduction in the consistency of this type of grease causes a serious problem in a guiding device that operates at a high speed. However in reality, a user mixes and uses another type of grease, such as a grease purchased by the user themselves, and thereby adversely affects the performance of the grease in relation to reducing wear in the guiding device. As a result, the guiding device may be damaged. Thus these types of accidents may be reduced if a grease can be developed that exhibits little variation in performance characteristics when mixed with another grease (for example consistency changes), that is to say, a grease having high mixing stability.

The present invention is proposed in light of the above problems. In other words, the present invention has the object of providing a grease composition for a mounter that exhibits excellent stability to mechanical shearing, and excellent mixing stability, and has the object of providing a guiding device for the mounter that includes the grease composition, and a mounter that mounts the guiding device.

### SOLUTION TO PROBLEM

The present inventors performed research into solving the above problems and, as a result of such research, completed the present invention with the insight that a grease composition having a predetermined physiochemical quality exhibits excellent stability to mechanical shearing and excellent mixing stability.
In other words, the grease composition according to the present invention contains a base oil and a thickening agent, and has a consistency of 200 - 400, a dropping point of at least 220°C, and a consistency change during a roll stability test of 0 to less than or equal to +100.

The guiding device for a mounter according to the present invention contains the grease composition above.

The mounter according to the present invention is equipped with the guiding device.

### ADVANTAGEOUS EFFECTS

The present invention provides a grease composition for a mounter that exhibits excellent stability to mechanical shearing and excellent mixing stability, a guiding device for the mounter that contains the grease composition, and a mounter equipped with the guiding device.

### BRIEF DESCRIPTION OF DRAWINGS

Fig. 1 is a perspective view showing the components of an embodiment of a guiding device according to the present invention.
Fig. 2 is a perspective view showing the components of another embodiment of the guiding device according to the present invention.
Fig. 3 is a plan view showing an embodiment of a mounter according to the present invention.
Fig. 4 is a sectional view showing the principal components of the embodiment of the mounter according to the present invention.

### DESCRIPTION OF EMBODIMENTS

The embodiments of the present invention will be described hereafter.

A mineral oil or a synthetic oil may be used as the base oil in the grease composition according to the present invention.

The mineral oil is obtained by a method normally used in manufacturing processes for lubricants in the petroleum refining industry (for example, a refined product obtained by applying at least one process selected from solvent deasphalting, solvent extraction, hydro-cracking, solvent dewaxing, hydro-refining, sulfuric acid washing, clay treatment or the like to a lubricant fraction obtained by vacuum distilling of the original oil starting from normal pressure). More specifically, the carbohydrate oil includes turbine oil, spindle oil, machine oil, and the like.

The synthetic oil includes, for example,
(1) a carbohydrate oil (for example; a poly α-olefin, or hydroxides thereof, such as polybutene, 1-octene oligomer, 1-decene oligomer, or the like (including an α-olefin copolymer); an alkyl aromatic compound such as alkyl naphthalene, alkyl benzene, or the like, or an alicyclic compound),
(2) an ester oil (for example; a diester such as di-tridecyl glutarate, di-2-ethylhexyl adipate, di-isodecyl adipate, di-tridecyl adipate and di-3-ethylhexyl sebacate; a polyol ester such as trimethylolpropane caprylate, trimethylolpropane pelargonate, pentaerythritol-2-ethylhexanoate, and pentaerythritol pelargonate; and an aromatic ester including phthalate esters, trimellitates, or pyromellitates),
(3) Polyether oils (for example; polyglycol; polyoxyalkylene glycol; or phenyl ethers such as polyphenylether; alkyl diphenyl ether; dialkyl diphenyl ether),
(4) Phosphate-based oils (for example; aromatic phosphate esters),
(5) Silicon-based oils (for example; silicone), and
(6) Halogen-based oils (for example; fluorinated polyethers).

These oils may be used singly or in combination.
In light of low temperature characteristics, the base oil is preferably a synthetic oil, and in particular, poly α-olefin is preferred.
The base oil in the grease composition according to the present invention preferably includes at least 60 mass% of a poly α-olefin, and more preferably 80 mass%.

The thickening agent used in the present invention may be selected from substances that enable formulation of a grease composition that has a consistency of 200 - 400, a dropping point of at least 220°C, and a consistency change during a roll stability test of 0 to less than or equal to +100.

The thickening agent may be either soap-based or non soap-based. A soap-based thickening agent may be exemplified by a metallic-soap thickening agent such as a calcium soap, an aluminum soap, a sodium soap, a lithium soap and obtained by reacting a carboxylic acid (including a glyceride) with a metal hydroxide; and a complex-soap thickening agent such as a calcium-complex soap, an aluminum-complex soap, a sodium-complex soap, and a lithium-complex soap.

The carboxylic acid for example includes a monocarboxylic acid such as stearic acid or oleic acid, a monohydroxycarboxylic acid such as 12-hydroxystearic acid, a dibasic acid such as terephthalic acid, azelaic acid, adipic acid, and decanedioic acid, and an aromatic acid such as benzoic acid, salicylic acid, phthalic acid, terephthalic acid, trimellitic acid, and pyromellitic acid. These compounds may be used singly or in combinations of two or more. However a combination of a carboxylic acid selected from a monohydroxycarboxylic acid and a monocarboxylic acid, which has 12 - 24 carbon atoms, and a carboxylic acid selected as a complexing agent from an aromatic carboxylic acid or dibasic acid having 6 - 16 carbon atoms is preferred due to obtaining a high dropping point. The carboxylic acid used as a complexing agent is preferably used in approximately 10 to approximately 50 parts by mass relative to 100 parts by mass of a carboxylic acid selected from a monohydroxycarboxylic acid and a monocarboxylic having 12 - 24 carbon atoms.

The metal hydroxide includes hydroxides of sodium, calcium, lithium, and aluminum, or the like.
The metal hydroxide preferably is preferably used in approximately 20 - 40 parts by mass relative to 100 parts by mass of the carboxylic acid.

The non soap-based thickening agent includes urea-based thickening agents such as aromatic diurea, aliphatic diurea, alicyclic diurea, triurea, polyurea, and the like; organic thickening agents such as sodium terephthalamate, polytetrafluoroethylene (PTFE), or the like; and inorganic thickening agents such as organic bentonite, graphite, silica gel, and the like.

The thickening agent used in the grease composition according to the present invention is preferably a composite soap-based thickening agent or a urea-based thickening agent, is more preferably a composite soap-based thickening agent, and particularly preferably is a lithium-complex soap.

The content ratio of the thickening agent in the grease composition according to the present invention is determined in response to a desired consistency A low degree of consistency is obtained by increasing the content ratio of the thickening agent.
In the specification of the present invention, "consistency" is a worked penetration measured using a method (25°C, 60W) as stated in Japanese Industrial Standard JIS K 2220.7. A "low degree of consistency" means a state in which a worked penetration value is small and the grease composition is hard.
The grease composition according to the present invention normally contains 5 mass% - 30 mass% of the thickening agent, and preferably 8 mass% - 25 mass%.

The grease composition according to the present invention may contain an additive normally used as desired in a grease composition.
The additive includes for example an antioxidant (for example an amine antioxidant such as an alkylated diphenyl amine, a phenyl-α-naphthylamine, an alkylated α-naphthylamine, or the like; a phenol antioxidant or the like such as 2,6-di-t-butyl-4-methyl phenol, 4,4'-methylene bis (2,6-di-t-butylphenol), and the like), an extreme pressure agent (for example, a phosphate extreme pressure agent such as a phosphate ester, an acid phosphate ester, a phosphite ester, an acid phosphite ester, and amine salts thereof; a sulfur-based extreme pressure agent such as sulfurized oil, a thiadiazole compound, dialkyl disulfide, methylene bis dialkyldithiocarbamate, and the like; an organometal compound such as zinc dithiophosphate, zinc dithiocarbamate, nickel dithiocarbamate, and the like), an anticorrosive agent (for example, a metal sulphonate, a lanolin derivative, sodium nitrite, succinic acid ester, a fatty acid zinc, an amine species, sorbitan monooleate), a structural stabilizer, metal deactivator (for example, benzotriazole), a wear reduction agent (for example, a phosphate ester, a dithiocarbamate ester), and a solid lubricant (for example, a polyimide, PTFE, graphite, a metallic oxide, boron nitride, melamine cyanurate, molybdenum disulfide).
The additive may be used singly or as a mixture of two or more.
The grease composition according to the present invention preferably contains 0.5 mass% - 15 mass% of the additive.

The consistency of the grease composition according to the present invention is 200 - 400, is preferably 205 - 295, and is still more preferably 220 - 265.

The dropping point of the grease composition according to the present invention is at least 220 ° C. When the dropping point is 220 ° C or less, there is a tendency for grease fly under high-speed or high-acceleration conditions. A preferred dropping point is at least 240 °C, more preferably 260 ° C, and still more preferably 280°C. Although there is no upper limit, normally the dropping point of the grease composition according to the present invention is less than or equal to 1000°C.

Variation in consistency during roll stability testing on the grease composition according to the present invention is 0 to less than or equal to +100, and preferably 0 to +75.
In the specification according to the present invention, "variation in consistency during roll stability testing" is a measured value after application of shearing under stated conditions (80 ° C, 20 hours) using a testing apparatus complying with ASTM D 1831.

The grease according to the present invention may be used in any guiding device for a mounter. However in particular, application is enabled to a guiding device for a mounter that operates in a movement direction with a maximum speed of at least 1 m/s (for example at least 3 m/s), or at a maximum acceleration of at least 10 m/s².

When the thickening agent of the grease composition according to the present invention is a lithium-complex soap, the grease composition according to the present invention may for example be manufactured as described hereafter.
(1) A part of the base oil, carboxylic acid, and an additive as described above that is added as required are mixed, heated to a temperature sufficient for dissolution, and dissolved, then
(2) To this solution, an aqueous solution of lithium hydroxide and a complexing agent (for example, azelaic acid, terephthalic acid) is added, heated and mixed. After the temperature of the mixture reaches approximately 150°C to approximately 250°C, the mixture is retained at that temperature for approximately 3 - 10 minutes. In another method, the complexing agent may be added in step (1) above.
(3) After adding the residual basic oil to the mixture, the mixture is cooled to approximately 70°C - 90 ° C, an additive as described above is added as desired, and mixed. Then the mixture is further cooled to room temperature, and a finishing process (uniform processing) is executed using a three-roll mill device.

The grease composition according to the present invention may be manufactured using another method to that described above. Furthermore when the thickening agent is a substance other than a lithium-complex soap, manufacture may be performed according to a customary method depending on the type of constituent thickening agent.

The present invention also provides a guiding device for a mounter containing the grease composition above. The guiding device for a mounter according to the present invention includes any configuration as long as the device has rolling bodies, an orbital shaft that containing a surface on which the rolling bodies roll, and a movement member that is relatively movable along the orbital shaft. For example, the device may be exemplified by a ball-screw guide device or a linear guide device. The guiding device for a mounter according to the present invention preferably operates at a maximum displacement speed of at least 1 m/s, or a maximum acceleration of at least 10 m/s².

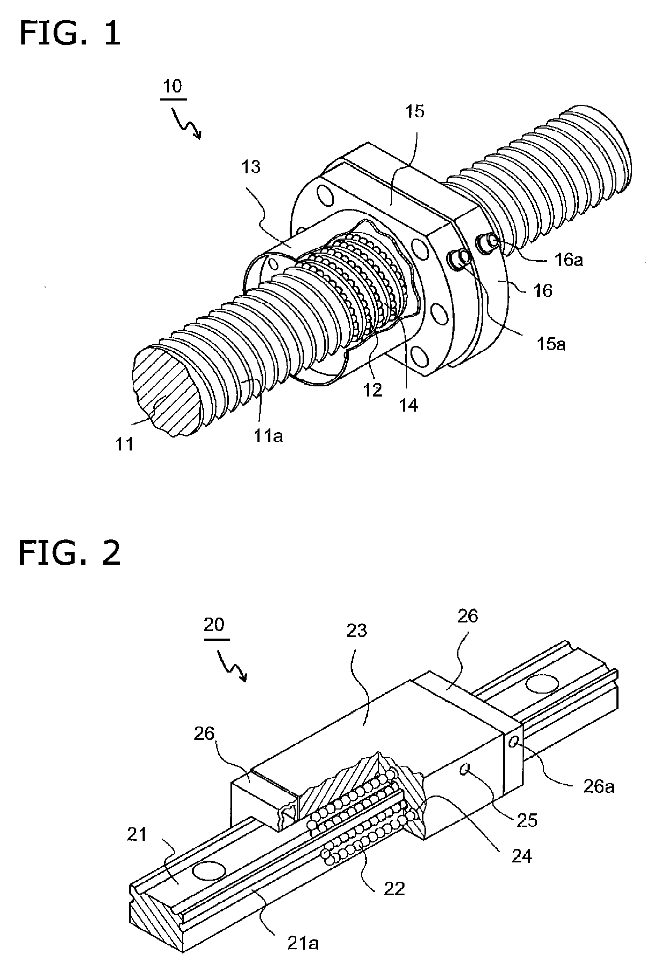

For example as shown in Fig. 1, a ball-screw guiding device for a mounter has a screw shaft as an orbital shaft 11, orbital shaft 11 extends in a longitudinal direction, and has a spiral rolling groove as a rolling surface 11a on the rolling bodies 12. The ball-screw guiding device has a movement member 13 that is provided with a rolling body circuit 14 formed on an inner peripheral surface of the movement member 13, the rolling body circuit 14 includes a spiral load rolling groove as a rolling surface for the rolling bodies 12 to correspond with the spiral rolling groove. The movement member 13 is engaged on the orbital shaft 11 to be relatively movable. The load rolling groove 14 of the rolling body circuit is configured between the rolling groove for the rolling bodies 12 of the orbital shaft 11 and the groove of the movement member 13. The rolling bodies 12 are housed in the rolling body circuit to roll in the load rolling groove 14 in a peripheral direction and to circulate endlessly along with a relative motion between the orbital shaft 11 and the movement member 13, that is to say, along with rotation. The grease composition according to the present invention is contained for example in the rolling body circuit 14.

It is preferred that a first grease supply unit 15 and a supply port 15a for supply of grease to the rolling bodies 12 are mounted/formed for example in the movement member 13 of the ball-screw guiding device 10 for a mounter. The first grease supply unit 15 is preferably mounted to supply grease to the rolling surface of the movement member 13 for the rolling bodies 12, that is to say, to the endless circuit.
A second grease supply unit 16 and a supply port 16a for supply of lubricant to the rolling surface 11 a of the orbital shaft 11 for the rolling bodies 12 are preferably mounted on the front end and/or the back end of the movement member 13.

Normally, a driving unit (not shown) is provided on one end of the orbital shaft 11 in the ball-screw guiding device 10 for a mounter for driving of the orbital shaft 11.

As shown in Fig. 2, the linear guiding device for the mounter includes an apparatus that is equipped an orbital rail that extends in a longitudinal direction as an orbital shaft 21. A rolling surface 21 a for ball bearings that are the rolling bodies 22 is formed on a side surface of the orbital shaft 21.

The movement member 23 is engaged through the rolling bodies 22 on the orbital shaft 21. The movement member 23 includes an endless circuit 24 as a rolling surface for the rolling bodies 22 corresponding to the rolling surface 21 a of the orbital shaft 21 The endless circuit 24 reaches an inner portion of the movement member 23, circulates the rolling bodies 22. The movement member 23 is configured in substantially as a saddle-shaped unit. The rolling bodies 22 are housed in the endless circuit 24, and the movement member 23 is configured to reciprocate on the orbital shaft 21 as the rolling bodies 22 circulate. The grease composition according to the present invention is contained for example in the endless circuit 24.

It is preferred that a first grease supply unit (not shown) and a supply port 25 for supply of grease to the rolling bodies 22 are mounted/formed for example in the movement member 23 or on the movement member 23, and more specifically, are connected to the endless circuit 24 of the movement member 23 in the linear guiding device 20 for a mounter.
A second lubrication supply unit 26 and a supply port 26a for supply of lubricant to the rolling surface 21 a of the orbital shaft 21 along with the movement of the movement member 23 are preferably mounted on a front end and/or the a back end.

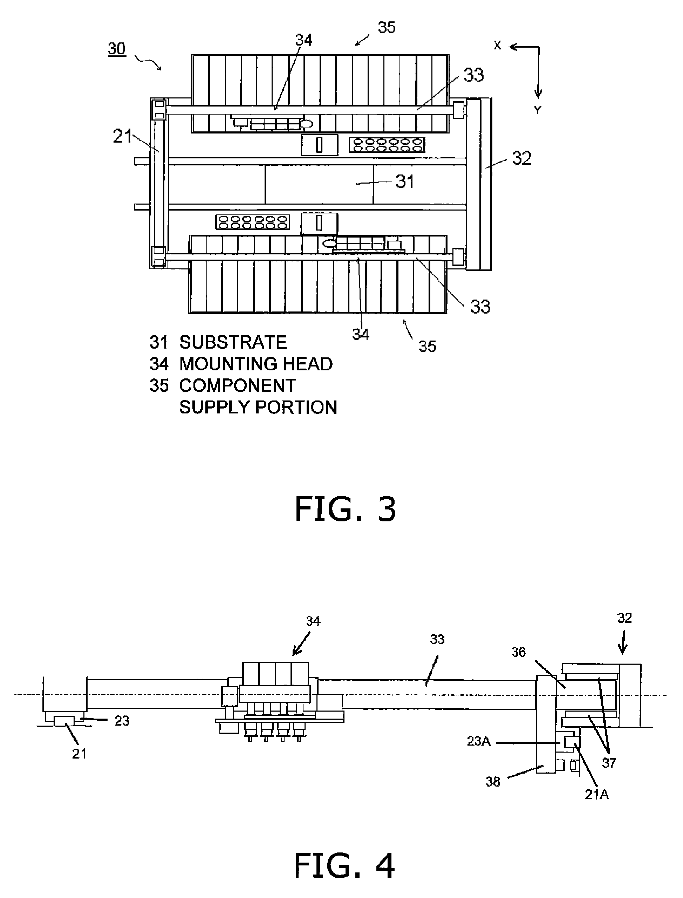

The present invention also provides a mounter that is equipped with a guiding device containing the grease composition above. The mounter may mount a plurality of guiding devices. The grease composition according to the present invention may be used commonly in the plurality of guiding devices.
In the present invention, there is no particular limitation on the structure or the type of the mounter. An example of this type of mounter is shown in Fig. 3.

The mounter shown in Fig. 3 is an electronic component mounting device that executes a mounting operation for an electronic component on a substrate.
In Fig. 3, the orbital shaft 21 is disposed in the Y direction on the left end of a substrate 31, and a Y linear actuator 32 is provided in the Y direction on the right end of the substrate 31. The Y linear actuator 32 is driven by a linear motor, and moves a moving beam 33 in the Y direction (a first direction). The left end of the moving beam 33 is guided by the orbital shaft 21 with the linear actuator. The moving beam 33 accommodates an X linear actuator (not shown) that is driven by a linear motor in the same manner as the Y linear actuator 32, and moves the mounting head 34 in the X direction with the X linear actuator.
As shown in Fig. 4, a movement member 23 is connected to the left end of the moving beam 33. The movement member 23 is engaged with the orbital shaft 21 to be slidable in the Y direction through the rolling bodies 22 (not shown). A coil 36 is connected to the right end of the moving beam 33. Two rows of magnet members 37 are provided in the Y linear actuator 32 to be horizontally opposed and disposed in the Y direction. The coil 36 is disposed between the two rows of magnet members 37 to thereby produce an impelling force in the Y direction. A movement member 23A is connected through a moving frame 38 on the left end of the moving beam 38. An orbital shaft 21A is connected to the Y linear actuator 32, and the movement member 23A is engaged with the orbital shaft 21A to slide in the Y direction through the rolling bodies (not shown).
As used herein, the orbital shaft 21A, the rolling bodies, and the movement member 23A are respectively the same as the orbital shaft 21, the rolling bodies 22, and the movement member 23.
The linear guiding device according to the present invention may also be used to configure the X linear actuator.
There is no particular limitation on the configuration of the linear motor, and the coil side and the magnet side may be reversed.

### EXAMPLES

### EXAMPLES 1 - 2

(1) An amount corresponding to 1/3 the mass of the mixture amount shown in Table 1 of a base oil, 12-hydroxystearic acid, and calcium sulfonate is heated and dissolved in a reaction vessel while stirring. Percentages % as shown in the Table 1 are mass(%).
(2) Lithium hydroxide (1-hydrate) is dissolved in 7 parts (mass ratio to a complexing agent) water, and the complexing agent is dissolved. This aqueous solution is added to the solution from (1) above, and mixed and heated. After the temperature of the mixture reaches 200°C, the solution is maintained at that temperature for five minutes.
(3) After adding the residual amount of base oil, the mixture is cooled at a rate of 50 °C/hour to a temperature of 80°C, and an antioxidant and an extreme pressure agent in the amounts shown in Table 1 are added and mixed.
(4) After allowing the mixture to naturally cool to room temperature, a finishing process is executed using a three-roll device to thereby obtain the grease composition according to the First Example and the Second Example.

**Table 1**

| | | Example 1 | Example 2 | Example 3 | Comparative Example 1 |
|---|---|---|---|---|---|
| Type of Thickening Agent | | Lithium-complex soap | | | Lithium soap |
| 12-hydroxystearic acid | | 13.6% | 12.3% | 11.7% | 8.8% |
| Complexing agent | azelaic acid | - | - | 4.4% | - |
| | terephthalic acid | 2.8% | 2.5% | - | - |
| Lithium hydroxide (1-hydrate) | | 3.6% | 3.0% | 3.9% | 1.3% |
| Base oil | | 75.3% | 77.5% | 75.3% | 85.2% |
| Bodying agent | | 0.7% | 0.7% | 0.7% | 0.7% |
| Calcium sulfonate | | 1.0% | 1.0% | 1.0% | 1.0% |
| Antioxidant | | 1.0% | 1.0% | 1.0% | 1.0% |
| Extreme pressure agent | | 2.0% | 2.0% | 2.0% | 2.0% |

| | | | | | |
|---|---|---|---|---|---|
| Base oil: poly α-olefin (kinematic viscosity (40°C) = 89.7 mm²/s, kinematic viscosity (100° C) = 12.8 mm²/s). Bodying agent: polymethacrylate, mass average molecular weight 470,000 Antioxidant: dioctyldiphenyl amine Extreme pressure agent: zinc diamyldithiocarbamate | | | | | |

### EXAMPLE 3

(1) An amount corresponding to 1/3 the mass of the mixture amount shown in Table 1 of a base oil, 12-hydroxystearic acid, azelaic acid, and calcium sulfonate is heated and dissolved in a reaction vessel while stirring.
(2) Lithium hydroxide (1-hydrate) is dissolved in 5 parts (mass ratio) of water. This aqueous solution is added to the solution from (1) above, and mixed and heated. After the temperature of the mixture reached 200°C, the solution is maintained at that temperature for five minutes.
(3) After adding the residual amount of base oil, the mixture is cooled at a rate of 50 °C/hour to a temperature of 80°C, an antioxidant and an extreme pressure agent in the amounts shown in Table 1 are added and mixed.
(4) After allowing the mixture to naturally cool to room temperature, a finishing process is executed using a three-roll device to thereby obtain the grease composition according to the Third Example.

### COMPARATIVE EXAMPLE 1

(1) An amount corresponding to 1/3 the mass of the mixture amount shown in Table 1 of a base oil, 12-hydroxystearic acid, and calcium sulfonate is heated and dissolved in a reaction vessel while stirring.
(2) Lithium hydroxide (1-hydrate) is dissolved in 5 parts (mass ratio) of water. This aqueous solution is added to the solution from (1) above, and mixed and heated. After the temperature of the mixture reaches 215°C, the solution is maintained at that temperature for five minutes.
(3) After adding the residual amount of base oil, the mixture is cooled at a rate of 50 °C/hour to a temperature of 80°C, an antioxidant and an extreme pressure agent in the amounts shown in Table 1 are added and mixed.
(4) After allowing the mixture to naturally cool to room temperature, a finishing process is executed using a three-roll device to thereby obtain the grease composition according to the First Comparative Example.

### Test Example 1

The consistency, the dropping point, and the change in the consistency with reference to a roll stability test were measured in the grease composition obtained in Examples 1 - 3, and Comparative Example 1, and a commercially-available grease (respectively Comparative Examples 2 and 3 in Table 2). Furthermore grease fly testing was performed.
Consistency is measured using the method (25°C, 60W) as stated in JIS K 2220.7, and "change in the consistency with reference to a roll stability test" is measured by a method as stated in ASTM D 1831 (where the temperature and time are varied to 80 ° C and 20 hours).
The grease fly testing was executed by operation for 76 hours of a chip mounter CM402M (manufactured by Panasonic Factory Solutions Co., Ltd.) under conditions of a maximum speed of 1.65 m/s and a maximum acceleration of 15 m/s² in both the X-axis and Y-axis direction. After operation, measurement was performed of the number of grease particles having a vertical and horizontal length of at least 1 mm that flew toward the periphery of the guiding device of the mounter.
These results are shown in Table 2. From the results, the grease composition according to the present invention exhibits excellent mechanical shear stability, and low fly during operation.

**Table 2**

| | Example 1 | Example 2 | Example 3 | Comparative Example 1 | Comparative Example 2 | Comparative Example 3 |
|---|---|---|---|---|---|---|
| Thickening Agent Type | Lithium-complex soap | | | Lithium soap | | Urea |
| Worked | 241 | 260 | 242 | 270 | 237 | 269 |
| penetration | | | | | | |
| Dropping | 278 | 281 | 290 | 202 | 206 | 254 |
| Point (°C) | | | | | | |
| Roll Stability | 308 (+67) | 329 (+69) | 295 (+54) | 333 (+63) | 351 (+114) | 340 (+71) |
| Test | | | | | | |
| (80 ° C20h) | | | | | | |
| Grease Fly | 15 | 4 | 0 | 100 | 30 | 22 |
| Test (count) | | | | | | |

### Test Example 2

The grease composition obtained in Example 1 and a commercially-available grease composition used as a control (Comparative Example 2) are subjected to an application test using a linear guide under conditions of acceleration/deceleration of 3G (29.4 m/s²), speed 2 m/s, and running distance 1000 km. These results show that the control grease composition exhibits a black color change in the grease composition and lack of luster (microscopic damage) to the balls. In contrast, the grease composition obtained in Example 1 exhibits almost no color change in the grease composition or lack of luster (microscopic damage) to the ball. As clearly shown by the results, the grease composition according to the present invention is extremely useful of increasing the durability of a guiding device for a mounter.

### Test Example 3

### Mixing Stability Test

The grease composition obtained in Example 1 and a commercially-available grease composition (Table 3) are mixed, and the consistency thereof is measured. The test was performed according to the method for testing a worked penetration as stated in JIS K 2220.7. The results are shown in Table 4 to Table 9. As clearly shown from the data, a high mixing stability is exhibited by the grease composition obtained by Example 1 and another grease composition.

**Table 3**

| | Commercially-available Grease 1 (Comparative Example 2 of Test Example 1 and 2) | Commercially-available Grease 2 | Commercially-available Grease 3 | Commercially-available Grease 4 | Commercially-available Grease 5 | Commercially-available Grease 6 (Comparative Example 3 of Test Example 1) |
|---|---|---|---|---|---|---|
| Thickening Agent | Lithium-based | Calcium Sulfonate Complex | Lithium-based | Lithium-based | Urea-based | Special calcium soap |
| Worked | 237 | 278 | 289 | 318 | 277 | 269 |
| penetration | | | | | | |
| Dropping Point | 206 | ≥300 | 187 | 214 | 247 | 254 |
| (°C) | | | | | | |
| Roll Stability | 351 (+114) | 274 (-4) | 373 (+84) | 365 (+47) | 354 (+77) | 340 (+71) |
| Test | | | | | | |
| (80°C20h) | | | | | | |

**Table 4**

| | | | |
|---|---|---|---|
| Mass (%) of grease composition in Example 1 | 100 | 50 | 0 |
| Mass (%) of commercially-available grease 2 | 0 | 50 | 100 |
| Worked penetration | 242 | 272 | 282 |
| Roll Stability Test 80°C, 20h | 308 (+66) | 301 (+29) | 313 (+31) |

**Table 5**

| | | | |
|---|---|---|---|
| Mass (%) of grease composition in Example 1 | 100 | 50 | 0 |
| Mass (%) of commercially-available grease 3 | 0 | 50 | 100 |
| Worked penetration | 242 | 263 | 289 |
| Roll Stability Test 80°C, 20h | 308 (+66) | 344 (+81) | 373 (+84) |

**Table 6**

| | | | |
|---|---|---|---|
| Mass (%) of grease composition in Example 1 | 100 | 50 | 0 |
| Mass (%) of commercially-available grease 4 | 0 | 50 | 100 |
| Worked penetration | 242 | 271 | 296 |
| Roll Stability Test 80°C,20h | 308 (+66) | 336 (+65) | 343 (+47) |

**Table 7**

| | | | |
|---|---|---|---|
| Mass (%) of grease composition in Example 1 | 100 | 50 | 0 |
| Mass (%) of commercially-available grease 5 | 0 | 50 | 100 |
| Worked penetration | 242 | 259 | 277 |
| Roll Stability Test 80°C, 20h | 308 (+66) | 313 (+54) | 365 (+88) |

**Table 8**

| | | | |
|---|---|---|---|
| Mass (%) of grease composition in Example 1 | 100 | 50 | 0 |
| Mass (%) of commercially-available grease 1 | 0 | 50 | 100 |
| Worked penetration | 242 | 241 | 237 |
| Roll Stability Test 80°C, 20h | 308 (+66) | 338 (+97) | 351 (+114) |

**Table 9**

| | | | |
|---|---|---|---|
| Mass (%) of grease composition in Example 1 | 100 | 50 | 0 |
| Mass (%) of commercially-available grease 6 | 0 | 50 | 100 |
| Worked penetration | 242 | 268 | 269 |
| Roll Stability Test 80°C, 20h | 308 (+66) | 337 (+69) | 340 (+71) |

### INDUSTRIAL APPLICABILITY

The present invention provides a grease composition for a mounter that exhibits excellent stability to mechanical shearing, and excellent mixing stability, and provides a guiding device for the mounter that includes the grease composition, and a mounter that mounts the guiding device.

### REFERENCE SIGNS LIST

- 10: ball-screw guiding device for a mounter
- 20: linear guiding device for a mounter
- 30: mounter

## Claims

1. A grease composition for a mounter comprising a base oil and a thickening agent, the grease composition having a worked penetration of 200 - 400, a dropping point of greater than or equal to 220°C, and a worked penetration change during a roll stability test of 0 to less than or equal to +100.

2. The grease composition according to claim 1, wherein the base oil contains at least 60 mass% of a poly α-olefin.

3. The grease composition according to claim 1 or claim 2 wherein the thickening agent is a lithium-complex soap.

4. A guiding device for a mounter including the grease composition according to any one of claim 1 to claim 3.

5. The guiding device for a mounter according to claim 4 wherein the guiding device operates with a maximum displacement speed of at least 1 m/s, or a maximum acceleration of at least 10 m/s².

6. A component mounter comprising the guiding device according to claim 4 or claim 5.
